(19) **Europäisches Patentamt**

**European Patent Office**

**Office européen des brevets**

(11) **EP 0 965 872 A1**

(12) **EUROPEAN PATENT APPLICATION**

(43) Date of publication:
22.12.1999 Bulletin 1999/51

(51) Int. Cl.$^6$: **G02F 1/015**

(21) Application number: **98304870.3**

(22) Date of filing: **19.06.1998**

(84) Designated Contracting States:
**AT BE CH CY DE DK ES FI FR GB GR IE IT LI LU MC NL PT SE**
Designated Extension States:
**AL LT LV MK RO SI**

(71) Applicant:
**HITACHI EUROPE LIMITED**
**Maidenhead, Berkshire, SL6 8YA (GB)**

(72) Inventor: **Baumberg, Jeremy J.**
**Cambridge, CB2 1LR (GB)**

(74) Representative:
**Read, Matthew Charles et al**
**Venner Shipley & Co.**
**20 Little Britain**
**London EC1A 7DH (GB)**

(54) **An optically active device**

(57)    A p-i-n electroabsorption modulator uses GaAs/AlGaAs quantum wells (7a, 7b, 7c, 7d, 7e) to absorb light (25) at a resonant frequency ($\lambda_1$). By arranging the wells in such a way that they become optically coupled, light is absorbed through a delocalised absorption mode called a polariton. This results in a resonance (9) with a narrower spectral linewidth ($\Delta\lambda_{\Sigma'}$) than has previously been achieved and is used to increase the switching efficiency of the device. Using this new absorbing mode, the performances of waveguides and non-linear optical switches are also improved.

## Description

The present invention relates to an optically active device comprising a plurality of optically active regions.

A known p-i-n absorption modulator, which uses quantum wells as active regions, is reported by K. J. Ebeling in "Integrated Optoelectronics" p 481 (Springer-Verlag, Berlin, 1989). The wells are identical and combine additively to increase the absorption strength of the device. A resonant absorption wavelength is determined by the widths of the wells. In practice, their widths vary not only from well to well, but also along the wells themselves. Because light is absorbed at slightly different wavelengths in different regions of the device, the absorption resonance is broadened which decreases the efficiency and speed of the device. To narrow the linewidth, efforts have been made to control the widths of the quantum wells and minimise fluctuations along them. Expensive fabrication techniques have improved layer-to-layer uniformity, but they have not been able to eradicate the layer fluctuations. Thus, linewidths are still broader than their intrinsic value. This problem is not just limited to optical modulators, but is shared by other devices using quantum wells as light absorbers or emitters.

The present invention seeks to circumvent this deficiency and yield spectral responses with narrower linewidths.

According to the present invention there is provided an optically active device comprising a plurality of optically active regions configured in such a way that their spectral response is a modification of the response they would produce individually. Preferably, the modification is a narrowing of a spectral response, which may be the response of the all the wells in combination.

Optically passive regions may separate the optically active regions.

The modification may take place through an optical coupling and may be optimised. The coupling may take place through interaction with a plurality of delocalized optical modes, which may be polaritons.

The optically active region may be a semiconductor with a direct band gap. The semiconductor may be a compound semiconductor, such as gallium arsenide for example. The semiconductor may be layered in such a way that quantum wells are formed.

The optically active regions may either emit or absorb electromagnetic radiation having a characteristic wavelength, being in the ultraviolet, visible or infrared region of the spectrum. The radiation may be polarised.

The optically active regions may be thinner than the optical wavelength.

The device may be operable as a modulator to modulate said spectral response and may be responsive to input optical radiation.

Thus, the efficiency of any optical device can be increased by simply and cheaply modifying the layer growth of the sample.

Embodiments of the present invention will now be described, by way of example, with reference to the following drawings, in which:

Figure 1 shows a prior art layer structure, comprising a single quantum well;
Figure 2 illustrates the absorption spectrum of the layer structure displayed in Figure 1;
Figure 3 shows a layer structure in accordance with the invention, comprising optimally spaced layers;
Figure 4 illustrates the absorption spectrum of the layer structure in Figure 3;
Figure 5 illustrates the reflectivity and emission spectra of the layer structure displayed in Figure 3;
Figure 6 illustrates a graph of coherent light emission plotted against time for the layer structures displayed in Figures 1 and 3;
Figure 7 shows a first practical device in accordance with the invention;
Figure 8 shows a second practical device in accordance with the invention; and
Figure 9 shows a third practical device in accordance with the invention.

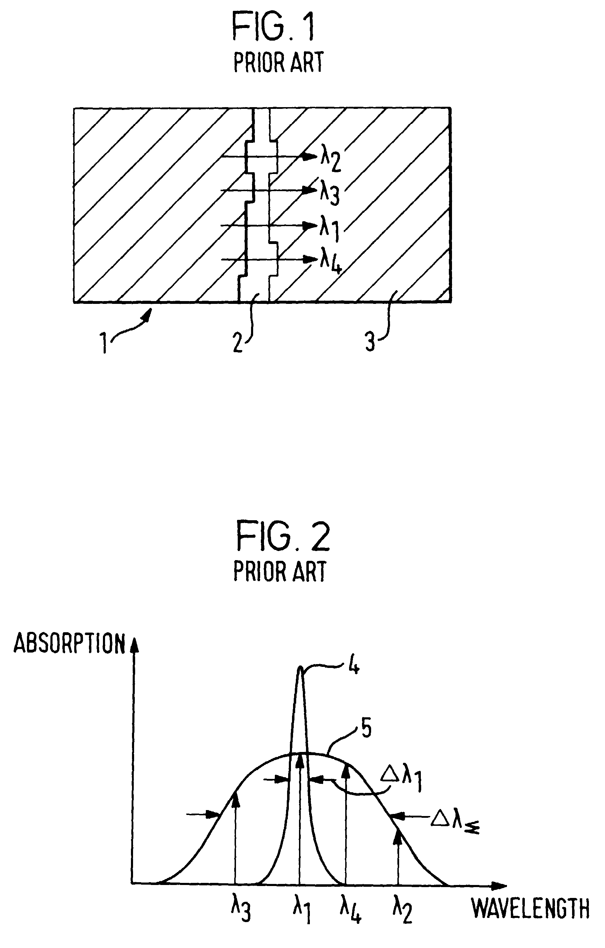

Referring to Figure 1, the epitaxially grown layers of a first, prior an semiconductor heterostructure 1 are shown in cross-section. The first heterostructure 1 is well known and comprises a single gallium arsenide (GaAs) quantum well 2, embedded in an aluminium gallium arsenide ($Al_xGa_{1-x}As$) matrix 3. The width of the well is designed to absorb light of a first wavelength $\lambda_1$. The ideal absorption spectrum 4 is pictured in Figure 2, showing a peak centred at a wavelength $\lambda_1$ and having an intrinsic linewidth $\Delta\lambda_1$. However, the width of the well 2 varies unavoidably throughout the heterostructure 1 due to thickness fluctuations and so a range of wavelengths is absorbed. In this range, three such wavelengths $\lambda_2$, $\lambda_3$ and $\lambda_4$ are illustrated in Figures 1 and 2. Because the first heterostructure 1 absorbs a range of wavelengths, the absorption spectrum is broadened 5 and has a linewidth $\Delta\lambda_\Sigma$ that is greater than $\Delta\lambda_1$.

Further quantum wells can be added in a well-known manner, to increase the total absorption. While this increases the magnitude of the absorption peak, the FWHM of the absorption peak remains the same. This is due to each well being isolated from one another, acting independently and absorbing light each with the same linewidth, $\Delta\lambda_\Sigma$. Thus, the addition of further wells, in accordance with prior art, does not modify the spectral response of the device since the ratio of height and width of the peak stays, at best, the same.

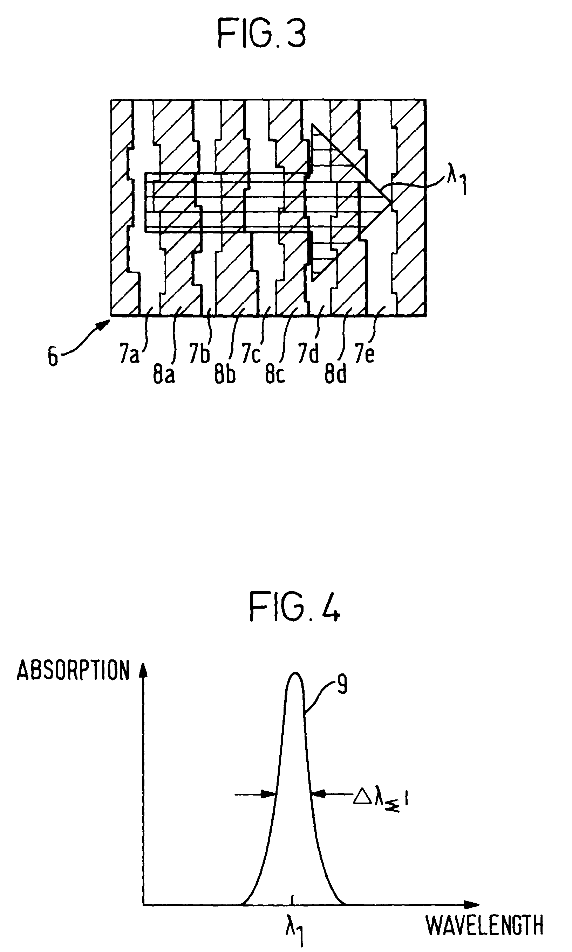

Referring to Figure 3, a second heterostructure 6 comprises five identical GaAs quantum wells 7a, 7b, 7c, 7d, 7e separated by $Al_xGa_{1-x}As$ spacer layers 8a, 8b, 8c, 8d.

The quantum wells are identical to the one used in the first heterostructure 1 and they too suffer from fluctuations in layer thickness. However, the thickness of each of the $Al_xGa_{1-x}As$ spacers 8a, 8b, 8c, 8d have been optimised in accordance with the present invention so as to decrease the linewidth of the spectral response $\Delta\lambda_{\Sigma'}$.

The thickness of each of the $Al_xGa_{1-x}As$ spacers 8a, 8b, 8c, 8d are determined by taking the known optical response of each layer 7a, 7b, 7c, 7d, 7e, 8a, 8b, 8c, 8d and computing light transmission and reflection at layer interfaces. The spectral responses for different layer arrangements are compared and this calculation is repeated until a minimum linewidth 9 is obtained.

The calculation of the absorption spectrum for a structure in which layers of an optically active material are separated by specific transparent layer, proceed from the solution of a matrix equation. The optical propagation of light through each layer, $i$, can be represented by a standard transfer matrix $T_i$ [M. Born and E. Wolf, Principles of Optics, 6 th Edition, (Plenum Press, 1980)]. The components of this matrix represent the reflection and transmission of light from the front to the back surfaces of the layer, with amplitude reflection and transmission coefficients, $r$ and $t$ respectively, determined by the material properties such that:

$$T = \frac{1}{t}\begin{bmatrix} (t^2-r^2)e^{ikd} & re^{-ikd} \\ -re^{ikd} & e^{-ikd} \end{bmatrix} \qquad \text{Equation 1}$$

where $d$ is the thickness of the layer and $k$ is the wavevector of the light in the media layer. The reflection and transmission coefficients depend on the interaction of the layer with light, defined by the relationships:

$$r = \frac{i\alpha\chi}{1-i\alpha\chi} \qquad \text{Equation 2}$$

$$t = 1 + r \qquad \text{Equation 3}$$

where $\chi(\lambda)$ is the dielectric susceptibility of the layer which, for the quantum wells, contains absorption contributions at different wavelengths from their fluctuating thickness'. $\alpha$ is a parameter proportional to the strength of the interaction of the semiconductor with light. Both are defined by L. C. Andreanni et al., Phys. Rev. B**57**, 4670 (1998). The function $\chi$ contains the spectrally distributed absorption resonances and thus, is what limits the spectral width of the optical properties of the single layer on its own. To solve for the spectral response of the entire structure, the matrices $T_i$ of each layer (with appropriate $d$, $k$, $\chi$, and $\alpha$ for each) are multiplied together to give $T_{tot}$, which encodes the reflection and transmission coefficients of the entire stack of layers. It is found for certain separations of the layers, $d$, that the spectral width of the entire structure (given by one component of $T_{tot}$) is less than that of each layer individually. This can also be seen from the complex eigenvalues of this matrix, which each represent the wavelength and the optical strength of one of the delocalized absorbing modes in the layer structure.

To optimise the narrowest spectral linewidth for a particular optical device, the parameters for each quantum well are kept fixed (since they are set by the desired wavelength of operation, and the experimentally known optical strength of each quantum well), and the spacing between the quantum wells, $d$, and their number, $N$, are varied. Since a simple analytical solution to these equations is not available, this optimisation is accomplished numerically. Results for 15 nm thick GaAs quantum wells, give an optimal number of layers $N \sim 10$, with a separation of $d \sim 13$ nm.

The appropriate design rule is to choose the appropriate thickness of quantum confined layer to have its bandgap at the desired operation wavelength of the device. The thickness and separation of these quantum wells is then varied in the above computational model in order to produce whatever spectral parameter is desired. In this case, the device is configures for minimum spectral linewidth.

The optical response of the second heterostructure 6, designed according to the above procedure, is compared with the prior art structure 1. Both heterostructures are grown by molecular beam epitaxy on a semi-insulating GaAs substrate orientated in the (100) direction, on top of buffer layers (not shown) which remove crystal imperfections and comprise undoped GaAs, a buffer superlattice and undoped $Al_xGa_{1-x}As$. All the GaAs quantum wells 2, 7a, 7b, 7c, 7d, 7e are 120Å thick and the $Al_xGa_{1-x}As$ spacers 8a, 8b, 8c, 8d are also 120 Å thick, with the aluminium mole fraction, x, of 0.3. The thickness of a layer can vary in as little as 100 nm in the plane of the layer, with $2\sigma \sim 7$ Å.

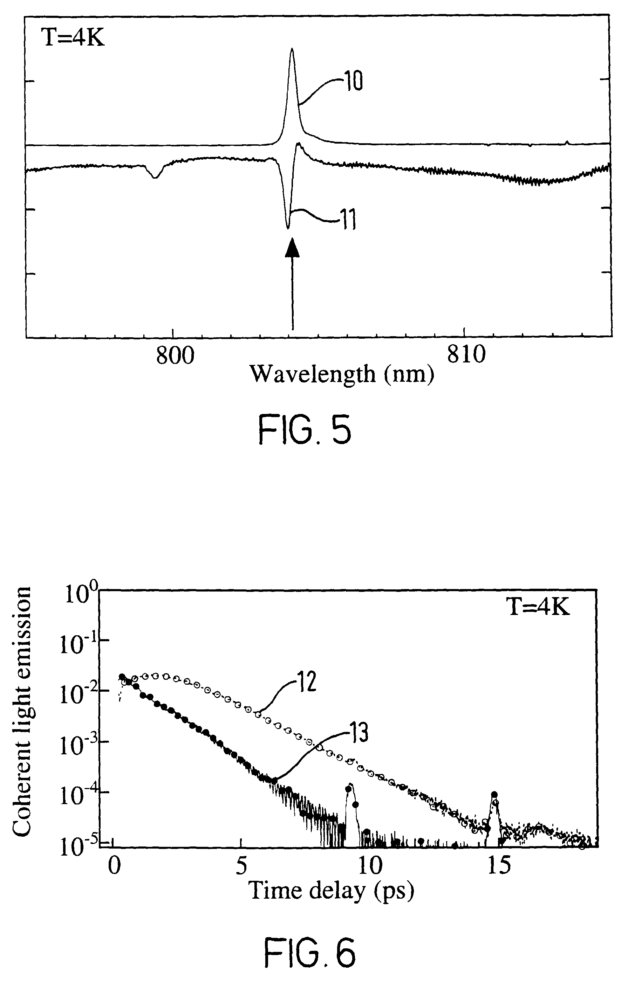

The reflectivity spectrum 10 of the second heterostructure 6 is shown in Figure 5 and an arrow indicates the position of a resonant absorbing wavelength at $\lambda = 804$ nm. The emission spectrum 11 is also shown in the same figure. The spectral linewidth of the sample is determined by measuring coherent light emission from an excited sample. The sample is excited by optically pumping it with a 100 ps pulse from a Ti:S laser, incident normally to the top surface. This process generates bound electron-hole pairs called excitons. Excitons are inherently unstable and ultimately re-radiate photons.

Referring to Figure 6, first and second coherent light emission decay plots 12, 13 are shown for the second and first heterostructure 6,1 respectively. The time taken for the light emission to fall by approximately 4 orders of magnitude is longer for the second heterostructure 6 comprising the five optimally spaced quantum wells. The decay time is inversely proportional to the linewidth and thus, the optimised quantum well spacing yields a narrower linewidth than would have hitherto been obtained. The optimised spacing produces a new mode of absorption which is spread out over more of the layer structure and has the effect of averaging-out the fluctuations in layer width. Consequently this produces much narrower and stronger absorption/emission lines.

The physical process by which the narrower linewidth is believed to be achieved will now be described.

A quantum well creates a series of resonant energy levels in the conduction and valence bands. This picture is modified when considering optical processes. When an electron-hole pair is generated by photo-absorption, they are confined within the same well. They will be bound together by coulomb attraction and form an exciton. The exciton possesses slightly less potential energy than an unbound electron and so its energy level sits slightly lower than the resonant level. Thus, for every resonant level there is at least one exciton energy level lying beneath it. There may be more than one exciton level, since an electron-hole pair may be bound to varying degrees of strength. The weaker the binding, the closer the exciton level lies to the (unbound) resonant level.

The width of the a well fluctuates in the plane of the well. This produces a range of photo-absorption wavelengths $\lambda_1$, $\lambda_2$, $\lambda_3$ and $\lambda_4$. This yields a broad absorption peak 5 as illustrated in Figure 2.

If another quantum well is brought into close proximity with the first, the two wells can become optically coupled.

The coupling can be thought of in the following way. While it may not be possible for an electron or hole to quantum mechanically tunnel from one well to the other, the two wells may interact through the emission and absorption of photons. An exciton in the first well decays and emits a photon. This photon travels through the transparent spacer and is absorbed by the second well, so generating an exciton. This process can also occur in the opposite direction and a photon can shuttle back and forth between the two wells. This process is so rapid that the location of the photon and the exciton cannot be pin-pointed to either one well or the other.

This description is somewhat simplistic and no real exchange of photons is needed for two wells to become coupled. (In the same way, an electron does not have to occupy a resonant state to define that level.) Instead, coupling takes place between levels of the wells overlapping in energy. It is well known that when any two quantum states of the same energy overlap, the states mix. The exciton states are no longer localised to their respective wells, but become spread across both wells. This process is extended as more wells are introduced and as they become coupled, exciton states becomes delocalized across all the layers. These states are responsible for the new absorbing modes that extend across the entire layered structure and, due to the manner in which they are formed, are called coupled exciton-photon modes or polaritons.

Polariton modes are much bigger than the individual layers that created them and are close in size to the wavelength of light. Because of their size, they do not 'see' fluctuations in individual layers. Instead, light interacts with a much larger volume. It is for this reason that fluctuations do not broaden the spectral response and a sharper linewidth 9 is obtained (Figure 4).

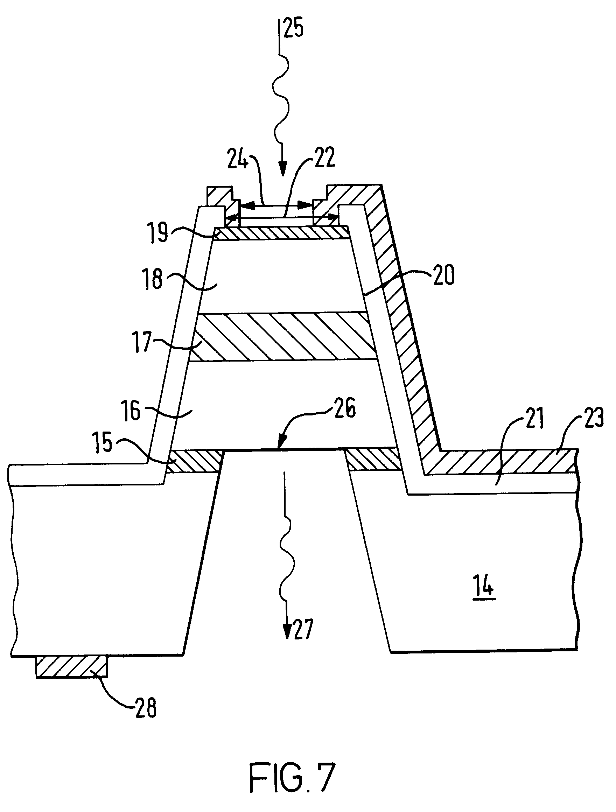

Referring to Figure 7, a first device according to the present invention is a p-i-n electroabsorption modulator. The device is fabricated from a layer structure grown on a conductive (100)-orientated GaAs substrate 14. The layers, in order of growth, comprise a first epitaxial region 15 of 200 nm thick $n^+$ - GaAs, a second epitaxial region 16 of 1 $\mu$m thick $n^+$ - $Al_xGa_{1-x}As$, a third epitaxial region 17 (the active region) comprising five 12 nm undoped GaAs quantum wells each separated by 12 nm of undoped $Al_xGa_{1-x}As$, a fourth epitaxial region 18 of 1 $\mu$m thick $p^+$ - $Al_xGa_{1-x}As$ and a fifth epitaxial region 19 of 10 nm $p^+$ - GaAs. The aluminium mole fraction, x, is 0.3. The n-type layers are doped with silicon and the p-type layers are doped with phosphorous, all to concentrations of $1\times10^{18}cm^{-3}$.

Conventional optical lithography is used to fabricate the device shown in Figure 7.

On the front side of a chip, a 200 $\mu$m diameter circular mask of optical resist is defined. A pillar 20 is formed by etching the unmasked material using a mixture of sulphuric acid, hydrogen peroxide and water. The etch removes both GaAs and $Al_xGa_{1-x}As$ and is carried out for a sufficiently long time that it penetrates the GaAs substrate 14. The mask is then removed. The surface of the chip is conformally covered with 200 nm silicon nitride ($Si_3N_4$) 21. A first window 22 is opened in $Si_3N_4$ at the top of the pillar by reactive ion etching, using a precursor gas mixture of $CF_4$ and $O_2$. A p-type ohmic contact metallization 23 comprising layers of indium (In) and silver (Ag) is deposited and patterned by lift-off. The metallization 23 is patterned in such a way that a second window 24 is opened at the top of the pillar, which allows an incident light beam 25 to strike the surface of the layer structure.

On the reverse side, the substrate 14 is mechanically thinned from about 250 $\mu$m to about 80 $\mu$m. Beneath the pillar 20, the substrate 14 and the first epitaxial layer 15 are chemically etched using a selective citric acid and hydrogen peroxide etch, which stops at the $n^+$ - GaAs/$n^+$ - $Al_xGa_{1-x}As$ interface 26. Thus, the modulated light 27 emerging from the device is not absorbed by the substrate 14. An n-type ohmic contact metallization 28 comprising layers of tin (Sn) and gold (Au) is deposited. Both the p- and n-type contacts are formed by sintering the sample at 450 °C.

The wavelength of the incoming light 25 is chosen such that it is just outside the linewidth $\Delta\lambda_{\Sigma'}$ of the absorption resonance $\lambda_1$ and so the device is normally transmissive. An electric field is generated by applying a bias between the two electrical contacts 23, 28, which changes the absorption resonance to the wavelength of the incident light 25, thereby making the device opaque. Since the optimised multiple quantum well structure yields a narrower absorption linewidth $\Delta\lambda_{\Sigma'}$, the wavelength of the incident light beam can sit much closer to the resonance $\lambda_1$. This allows for faster switching with a lower applied bias.

It is stressed that the provision of quantum wells is not necessary to generate polariton modes. Thin layers of any material that is optically active may be used. They may be separated from each other using transparent spacers in such a way that the spectral response is narrowed. These layers can be deposited one-on-top-of - another or sit side-by-side.

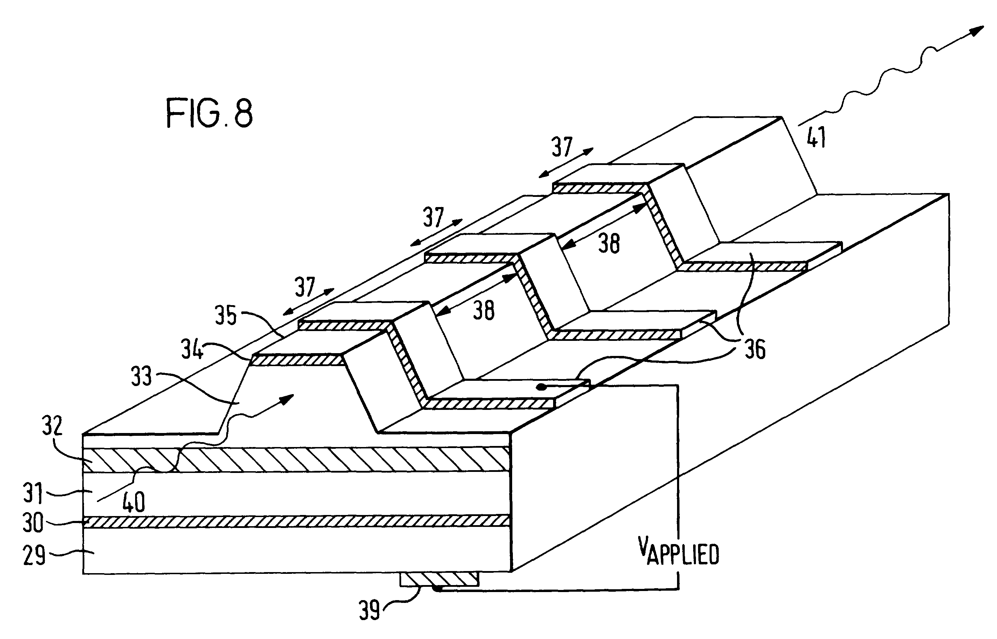

Referring to Figure 8, a second device according to the present invention is an electroabsorption/refraction waveguide modulator which is patterned into absorbing and transparent layers along its length. The device is fabricated from a layer structure grown on a conductive (100)-orientated GaAs substrate 29. The layers, in order of growth, comprise a first epitaxial region 30 of 200 nm thick $n^+$ - GaAs, a second epitaxial region 31 of 1 $\mu$m thick $n^+$ - $Al_xGa_{1-x}As$, a third epitaxial region 32 (the active region) comprising five 12 nm undoped GaAs quantum wells each separated by 12 nm of undoped $Al_xGa_{1-x}As$, a fourth epitaxial region 33 of 1 $\mu$m thick $p^+$ - $Al_xGa_{1-x}As$ and a fifth epitaxial region 34 of 10 nm $p^+$ - GaAs. The n-type layers are doped with silicon and the p-type layers are doped with phosphorous, both to concentrations of $1\times10^{18}cm^{-3}$.

A 5 $\mu$m wide mesa 35 is defined by masking the surface of the chip using optical lithography and etching 900 nm deep using a mixture of sulphuric acid, hydrogen peroxide and water. The etch is calibrated to stop just above the third epitaxial region 32 containing the quantum well structure. Electron-beam lithography is then used to pattern a resist, which define strips crossing perpendicularly across the mesa 35. A p-type ohmic contact metallization 36 of titanium (Ti) and gold (Au) is deposited and lifted-off, thereby revealing the series of metal strips 37. The exact separation of these strips 37 is determined by the optimisation calculation previously described. The structure is exposed to a short etch to remove the surface p-type GaAs capping layer. An n-type ohmic contact 39 is made to the substrate and the structure is sintered.

Applying a reverse bias to the p-type pads, produces alternating absorbing 37 and transparent 38 regions. Thus, incident light 40 passing along the length of the waveguide can be modulated.

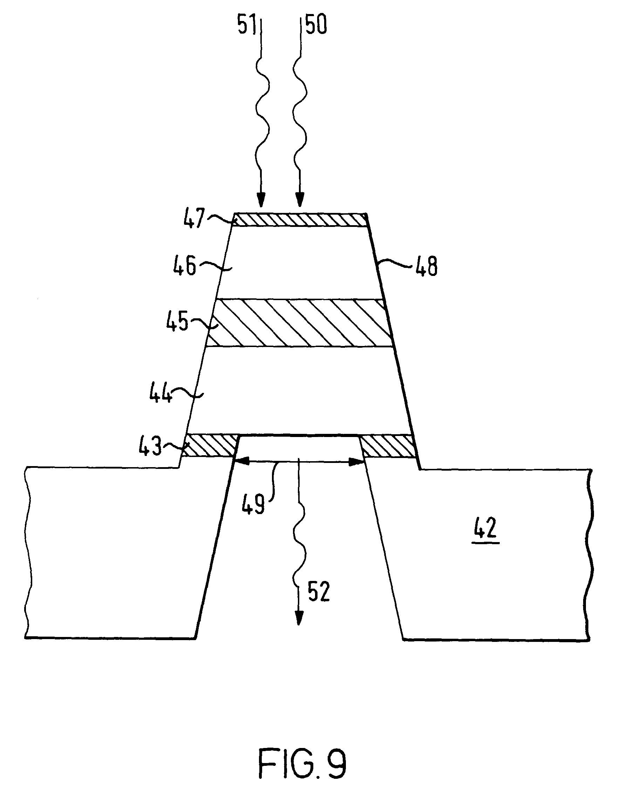

Referring to Figure 9 a third device according to the present invention is a non-linear optical switch. The device is fabricated from a layer structure grown on a semi-insulating (100)-orientated GaAs substrate 42. The layers, in order of growth, comprise a first epitaxial region 43 of 100 nm thick undoped GaAs, a second epitaxial region 44 of 1 $\mu$m thick undoped $Al_xGa_{1-x}As$, a third epitaxial region 45 (the active region) comprising five 12 nm undoped GaAs quantum wells each separated by 12 nm of undoped $Al_xGa_{1-x}As$, a fourth epitaxial region 46 of 1 $\mu$m thick $Al_xGa_{1-x}As$ and a fifth epitaxial region 47 of 10 nm undoped GaAs.

The device is fabricated in a similar fashion to the second embodiment but without the need for electrical contacts. A cylindrical pillar 48 is formed by etching, and the substrate 42 is chemically thinned to form a window 49, beneath the pillar.

The passage of a sense beam 50 that strikes the pillar at normal incidence is modulated by a switching beam 51. The wavelength of the switching beam 51 is chosen so that it is only absorbed by the spacer layers within the quantum well structure 45. The wavelength of the sense beam 50 is chosen slightly off absorption resonance, so that the device is normally transparent. The switching beam 51 upsets the optimised coupling between layers and destroys the polariton modes. The range of wavelengths absorbed, $\Delta\lambda_\Sigma$ becomes wide enough to include the sense beam wavelength and the device becomes opaque. Turning off the switching beam 51 will restore the narrower absorption linewidth and the device becomes transparent once more.

It will be appreciated that many modifications can be made to the embodiments described above.

Many material systems may be used, for example Langmir-Blodgett films built of CuCl. In fact, any material that interacts with light separated by regions of optically passive material can be used.

The electroabsorption/refraction waveguide can be patterned into light absorbing and transmitting regions using ion-beam implantation and thermal annealing. Using a focused ion beam or a resist mask, alternating implanted and unimplanted regions are defined along the length of the waveguide. For example, gallium with an energy of about 50 keV can be used as an ion species. The implant disorders the crystal lattice, creating vacancies. The sample is then annealed. Vacancies aid interdiffusion of the GaAs/AlGaAs quantum well layers, thus forming a homogenous AlGaAs region which is optically transparent at the wavelength used. Where the waveguide was masked and implantation did not take place, no interdiffusion occurs and the quantum well layers remain intact.

The electroabsorption/refraction waveguide does not necessarily have to be fabricated from an optimised layer structure. Any suitable waveguide material, including silicon and GaAs can be used.

The p-i-n absorption modulator can be fabricated without the need of a thinned substrate. Instead the absorbing wavelength can be chosen so that it does not interact with the substrate. For example, $In_yGa_{1-y}As$ (y=0.04) quantum wells absorb light of wavelength $\lambda$= 910 nm, GaAs is transparent to light of this wavelength.

The devices described above all modulate radiation with a wavelength of $\lambda \sim 800$ nm, which is in the infrared pan of the spectrum. By choosing appropriate materials and device structures, devices can not only operate at still longer wavelengths but also in the visible and ultraviolet regions of the spectrum. The radiation may also be polarised.

For small devices, etched surfaces may be passivated to terminate dangling bonds. In GaAs, this is done by immersion in ammonium sulphide.

Other etches can be used to define mesas and chemically thin substrates. For example, a mixture of ammonium hydroxide, hydrogen peroxide and water can be used.

**Claims**

1. An optically active device comprising a plurality of optically active regions configured in such a way that their spectral response is a modification of the response they would produce individually.

2. A device according to claim 1 wherein the modification is a narrowing of the spectral response.

3. A device according either claim 1 or 2 wherein the modification is of the combined spectral response of the plurality of optically active regions..

4. A device according to any preceding claim wherein the optically active regions are separated by optically passive regions.

5. A device according to any preceding claim wherein the optically active regions are configured in such a way that the modification takes place through an optical coupling between them.

6. A device according to claim 5 wherein the configuration of optically active regions is such as to maximise the optical coupling between them.

7. A device according to claim 5 or 6 wherein the coupling takes place through interaction with a plurality of delocalized optical modes.

8. A device according to claim 7 wherein the optical modes are polaritons.

9. A device according to any preceding claim wherein the optically active region is a semiconductor.

10. A device according to claims 9 wherein the semiconductor has a direct band gap.

11. A device according to claims 9 or 10 wherein the semiconductor is a compound semiconductor.

12. A device according to claim 11 wherein the compound semiconductor is gallium arsenide.

13. A device according to any preceding claim wherein the optically active regions are quantum wells.

14. A device according to any preceding claim wherein the configuration is such that it minimises the linewidth of the spectral response.

15. A device according to any preceding claim wherein the optically active regions emit or absorb electromagnetic radiation having a characteristic wavelength.

16. A device according to claim 15 wherein the electromagnetic radiation is in the ultraviolet, visible or infra-red regions of the spectrum.

17. A device according to either claim 15 or 16 wherein the electromagnetic radiation is polarised.

18. A device according to claim 15 wherein the optically active regions are thinner than the optical wavelength.

19. A device according to any preceding claim operable as a modulator to modulate said spectral response.

20. A device according to claim 19, responsive to input optical radiation to modulate the spectral response.

EP 0 965 872 A1

# FIG. 1
## PRIOR ART

# FIG. 2
## PRIOR ART

# FIG.3

# FIG.4

T=4K

10

11

800    810
Wavelength (nm)

FIG. 5

$10^0$

$10^{-1}$

$10^{-2}$

$10^{-3}$

$10^{-4}$

$10^{-5}$

Coherent light emission

T=4K

12

13

0    5    10    15
Time delay (ps)

FIG. 6

FIG.7

FIG.8

EP 0 965 872 A1

FIG.9

## EUROPEAN SEARCH REPORT

Application Number

EP 98 30 4870

**European Patent Office**

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | KAVOKIN A V ET AL: "Exciton-light coupling in quantum wells: From motional narrowing to superradiance" PHYSICAL REVIEW B (CONDENSED MATTER), 15 MAY 1998, APS THROUGH AIP, USA, vol. 57, no. 20, pages R12697-R12700, XP002082584 ISSN 0163-1829 * the whole document * | 1-20 | G02F1/015 |
| X | SAVONA V: "Strong coupling of exciton-polaritons in semiconductor microcavities" EIGHTH INTERNATIONAL CONFERENCE ON II-VI COMPOUNDS, GRENOBLE, FRANCE, 25-29 AUG. 1997, vol. 184-185, pages 737-744, XP004119940 ISSN 0022-0248, Journal of Crystal Growth, 6 Feb. 1998, Elsevier, Netherlands * page 743, right-hand column * | 1-10 | |
| A | SKOLNICK M S ET AL: "Strong coupling phenomena in quantum microcavity structures" SEMICONDUCTOR SCIENCE AND TECHNOLOGY, JULY 1998, IOP PUBLISHING, UK, vol. 13, no. 7, pages 645-669, XP002082585 ISSN 0268-1242 * page 660, left-hand column * | 1-20 | TECHNICAL FIELDS SEARCHED (Int.Cl.6) G02F |

-/--

The present search report has been drawn up for all claims

| Place of search | Date of completion of the search | Examiner |
|---|---|---|
| THE HAGUE | 29 October 1998 | Diot, P |

13

European Patent Office

**EUROPEAN SEARCH REPORT**

Application Number

EP 98 30 4870

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | BAUMBERG J J ET AL: "Polariton motional narrowing in semiconductor multiple quantum wells" PHYSICAL REVIEW LETTERS, 20 APRIL 1998, APS, USA, vol. 80, no. 16, pages 3567-3570, XP002082586 ISSN 0031-9007 * the whole document * | 20 | |
| A,D | ANDREANI L C ET AL: "Effect of inhomogeneous broadening on optical properties of excitons in quantum wells" PHYSICAL REVIEW B (CONDENSED MATTER), 15 FEB. 1998, APS THROUGH AIP, USA, vol. 57, no. 8, pages 4670-4680, XP002082587 ISSN 0163-1829 Chapter: VI.CONCLUSIONS | 1-20 | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 29 October 1998 | Diot, P |